# EUROPEAN PATENT APPLICATION

(11) **EP 4 730 513 A1**
(43) Date of publication of application: **22.04.2026**
(21) Application number: 25204136.3
(22) Date of filing: 23.09.2025
(51) Int. Cl.: H01M 50/209, H01M 50/383, H01M 50/593

(54) **BATTERY MODULE**

(30) Priority: 14.10.2024 KR 20240139363
(71) Applicant: SAMSUNG SDI CO., LTD., Yongin-si, Gyeonggi-do 17084 (KR)
(72) Inventor: JANG, Seongmin, 17084 Yongin-si (KR)
(74) Representative: Marks & Clerk LLP

(57) **Abstract**

A battery module includes a plurality of battery cells positioned side by side along a first direction with main surfaces thereof facing each other, each battery cell including a lower vent, an insulation layer covering the lower vents of the plurality of battery cells, and a lower sheet located under of the insulation layer, wherein the lower sheet includes a first adhesive layer attached to the insulation layer and second adhesive layers located on each of opposite sides of the first adhesive layer and attached to lower surfaces of the plurality of battery cells, wherein the second adhesive layers are positioned spaced apart from the first adhesive layer.

## Description

### FIELD

The present disclosure relates to a battery module.

### BACKGROUND

Secondary batteries are batteries that can be charged and discharged, unlike primary batteries that cannot be charged. Low-capacity secondary batteries are used in small, portable electronic devices such as smartphones, feature phones, laptops, digital cameras, and camcorders, while large-capacity secondary batteries are widely used as motor drive power supplies in hybrid cars, electric cars, or the like, and as power storage batteries. These secondary batteries include an electrode assembly including a positive electrode and a negative electrode, a case for accommodating the electrode assembly, an electrode terminal connected to the electrode assembly, or the like.

The above-described information disclosed in the background art of this invention is only intended to improve understanding of the background of the present disclosure and therefore may include information that does not constitute the conventional art.

### SUMMARY

Embodiments provide a battery module with improved stability.

However, the problems to be solved by the present disclosure are not limited to the problems mentioned above, and other problems and advantages of the present disclosure that are not mentioned may be understood by the following description and will be more clearly understood by the embodiments of the present disclosure. In some embodiments, it will be appreciated that the problems and advantages to be solved by the present disclosure may be realized by the means and combinations thereof indicated in claims.

A battery module according to aspects of the present disclosure includes a plurality of battery cells arranged side by side along a first direction with main surfaces thereof facing each other, each battery cell including a lower vent, an insulation layer covering the lower vents of the plurality of battery cells, and a lower sheet located at the bottom of the insulation layer (e.g. located on the insulation layer or, in use, located under the insulation layer), wherein the lower sheet includes a first adhesive layer attached to the insulation layer and second adhesive layers located on each of opposite sides of the first adhesive layer and attached to lower surfaces of the plurality of battery cells, wherein the second adhesive layers may be positioned spaced apart from the first adhesive layer.

In embodiments, the insulation layer may extend in a direction substantially parallel to the first direction.

In embodiments, the width of the insulation layer along a second direction perpendicular to the first direction may be greater than the width of the lower vent along the second direction.

In embodiments, the first adhesive layer may be thinner than the second adhesive layers.

In embodiments, the thickness of the first adhesive layer may be 0.01 mm to 0.03 mm.

In embodiments, the thickness of the second adhesive layers may be 0.3 mm to 0.7 mm.

In embodiments, the insulation layer may include aerofoam.

In embodiments, the aeroform may have a compressed state.

In embodiments, the compressibility of the aeroform may be 20% to 30%.

In embodiments, the sum of the thickness of the compressed aeroform and the thickness of the first adhesive layer may be approximately equal to the thickness of the second adhesive layers.

A battery module according to another aspect of the present disclosure includes a plurality of battery cells arranged side by side along a first direction with main surfaces thereof facing each other, each battery cell including a lower vent, an insulation layer covering the lower vents of the plurality of battery cells, and a lower sheet located at the bottom of the insulation layer (e.g. located on the insulation layer or, in use, located under the insulation layer), wherein the lower sheet includes a first adhesive layer attached to the insulation layer and second adhesive layers located on each of opposite sides of the first adhesive layer and attached to lower surfaces of the plurality of battery cells and the insulation layer has a compressibility of 20% to 30% and may be compressed.

In embodiments, the insulation layer may extend in a direction substantially parallel to the first direction.

In embodiments, the width of the insulation layer along a second direction perpendicular to the first direction may be greater than the width of the lower vent along the second direction.

In embodiments, the first adhesive layer may be thinner than the second adhesive layers.

In embodiments, the thickness of the first adhesive layer may be 0.01 mm to 0.03 mm.

In embodiments, the thickness of the second adhesive layers may be 0.3 mm to 0.7 mm.

In embodiments, the insulation layer may include aerofoam.

In embodiments, the second adhesive layers may be positioned spaced apart from the first adhesive layer.

In embodiments, each of the plurality of battery cells may include an electrode terminal on a side opposite to the lower vent.

In embodiments, the sum of the thickness of the compressed insulation layer and the thickness of the first adhesive layer may be approximately equal to the thickness of the second adhesive layers.

Other aspects, features and advantages other than those described above will become apparent from the following drawings, claims and detailed description of the invention.

At least some of the above and other features of the invention are set out in the claims.

### BRIEF DESCRIPTION OF THE DRAWINGS

These and/or other aspects will become apparent and more readily appreciated from the following description of the embodiments, taken in conjunction with the accompanying drawings in which:
FIG. 1 is a perspective view schematically illustrating an example of a battery module according to embodiments of the present disclosure;
FIG. 2 is a perspective view schematically illustrating an example of a unit cell of the battery module of FIG. 1;
FIG. 3 is a cross-sectional view schematically illustrating an example of a cross-section I-I' of FIG. 2;
FIG. 4 is a perspective view schematically illustrating an example of a lower sheet and an insulation layer provided at the bottom of the battery module of FIG. 1; and
FIGS. 5 and 6 are cross-sectional views each showing a combination relationship between the battery cell of FIG. 2 and the lower sheet and insulation layer.

### DETAILED DESCRIPTION

The present disclosure may be modified in various ways and has various embodiments. Specific embodiments are illustrated in the drawings and described in detail in the detailed description. However, this is not intended to limit the present disclosure to specific embodiments, but should be understood to include all transformations, equivalents, or substitutes included in the technical scope of the present disclosure. In the description of the present disclosure, when it is determined that a detailed description of a related known art may obscure the gist of the present disclosure, the detailed description is omitted.

The terms first, second, or the like may be used to describe various components, but the components should not be limited by the terms. The terms are used solely to distinguish one component from another.

The terms used in this application is used only to describe specific embodiments and is not intended to limit the present disclosure. Singular expressions include plural expressions unless the context clearly indicates otherwise. Additionally, in each drawing, components are exaggerated, omitted, or schematically illustrated for convenience and clarity of description, and the size of each component does not entirely reflect the actual size.

In the description of each component, when it is described as being formed on or under, on and under include both those formed directly or through the intervention of other components, and the criteria for on and under are explained based on the drawings.

Hereinafter, embodiments of the present disclosure will be described in detail with reference to the attached drawings. When describing with reference to the attached drawings, identical or corresponding components are assigned the same drawing numbers and redundant descriptions thereof are omitted.

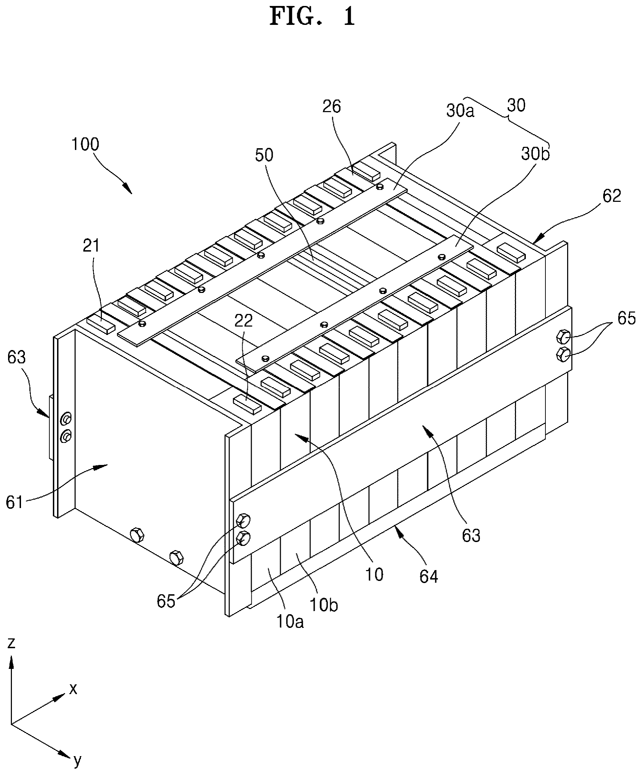

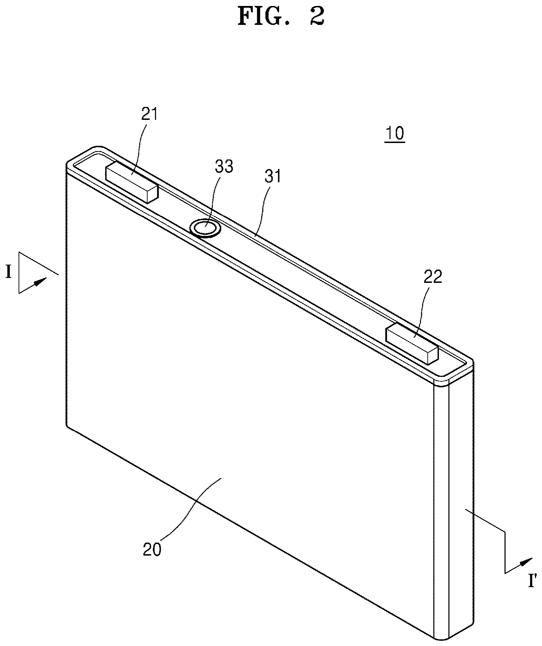

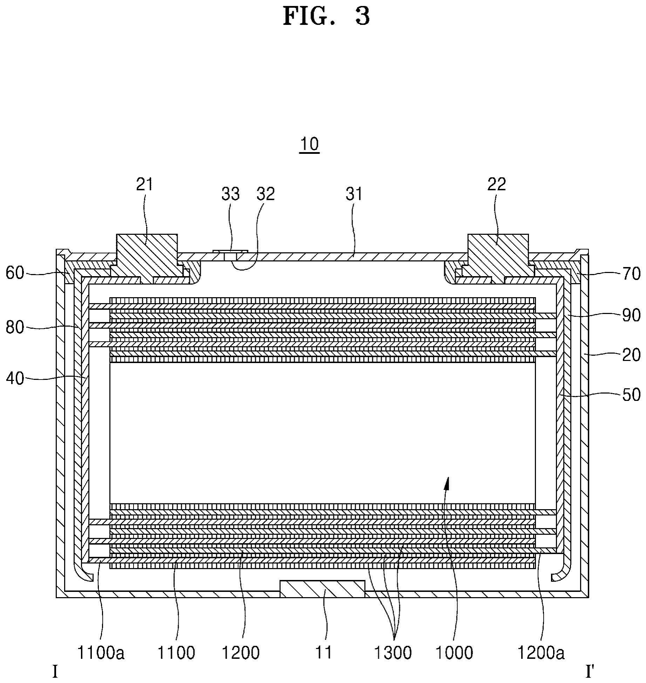

FIG. 1 is a perspective view schematically illustrating an example of a battery module 100 according to embodiments of the present disclosure, FIG. 2 is a perspective view schematically illustrating an example of a unit battery cell 10 of the battery module 100 of FIG. 1, and FIG. 3 is a cross-sectional view schematically illustrating an example of a cross-section I-I' of FIG. 2.

Referring to FIGS. 1 to 3, the battery module 100 according to embodiments of the present disclosure may include a plurality of battery cells 10 whose main surfaces face each other and are arranged side by side along a first direction x, each battery cell 10 including a lower vent 11.

As illustrated in FIG. 1, the battery module 100 according to the present disclosure includes electrode terminals 21, 22, a plurality of battery cells 10 arranged in one direction, a connection tab 26 connecting a battery cell 10a of the plurality of battery cells 10 to an adjacent battery cell 10b of the plurality of battery cells 10, and a protection circuit module 30 having one end portion connected to the connection tab 26. The protection circuit module 30 may be a battery management system (BMS). In some embodiments, the connection tab 26 may include a body portion that contacts the electrode terminals 21, 22 between the battery cells 10a, 10b adjacent to each other and an extension portion that extends from the body portion and is connected to the protection circuit module 30. The connection tab 26 may be a bus bar.

The battery cell 10 may include a battery case (20; FIG. 2) and an electrode assembly (1000; FIG. 3) and electrolyte housed within the battery case 20. The electrode assembly 1000 and electrolyte react electrochemically to generate energy. One side of the battery cell 10 may be provided with the electrode terminals 21, 22 electrically connected to the connection tab 26 and the lower vent 11 that serves as a discharge passage for gases generated internally. The above description is given as an example of a series connection, but it is not limited to this structure and various connection structures may be adopted as needed. In some embodiments, the number and arrangement of battery cells 10 are not limited to the structure illustrated in FIG. 1 and may be changed as needed.

A plurality of battery cells 10 may be arranged in one direction so that the wide surfaces of the battery cells 10 face each other, and the arranged plurality of battery cells 10 may be fixed by a housing. The housing may include a pair of end plates 61, 62 facing the wide surfaces of the battery cells 10, a side plate 63 connecting the pair of end plates 61, 62, and a bottom plate. The side plate 63 supports a side surface of the battery cell 10, and the bottom plate may support a bottom surface of the battery cell 10. In some embodiments, the pair of end plates 61, 62, the side plate 63 and the bottom plate may be connected by a member such as a bolt 65.

The protection circuit module 30 mounts electronic components and protection circuits, or the like, and may be electrically connected to the connection tab 26 described below. The protection circuit module 30 includes a first protection circuit module 30a and a second protection circuit module 30b extending from different positions along a direction in which a plurality of the battery cells 10 are arranged, and at this time, the first protection circuit module 30a and the second protection circuit module 30b are spaced apart from each other by a certain distance but positioned parallel to each other to be electrically connected to connection tab 26 adjacent thereto.

In some embodiments, the first protection circuit module 30a is formed to extend on one upper side of the plurality of battery cells 10 along the direction in which the plurality of battery cells 10 are arranged, and the second protection circuit module 30b is formed to extend on the other upper side of the plurality of battery cells 10 along the direction in which the plurality of battery cells 10 are arranged, but the second protection circuit module 30b is positioned to be spaced apart from the first protection circuit module 30a by a certain distance with the lower vent 11 interposed therebetween, but may be arranged parallel to the first protection circuit module 30a.

In this way, the two protection circuit modules are arranged side by side and spaced apart from each other along the direction in which the plurality of battery cells 10 are arranged, thereby minimizing an area of a printed circuit board (PCB) constituting the protection circuit module 30.

The unnecessary area of PCB is minimized by configuring the protection circuit module 30 as two separate protection circuit modules 30a, 30b. In embodiments, the first protection circuit module 30a and the second protection circuit module 30b may be connected to each other by a connection member 50 with conductivity. At this time, one side of the connection member 50 is connected to the first protection circuit module 30a, and the other side is connected to the second protection circuit module 30b, so that an electrical connection may be made between the two protection circuit modules 30a, 30b.

The connection may be made by any one of soldering, resistance welding, laser welding or projection welding methods.

In embodiments, the connection member 50 may be, for example, an electric wire. In some embodiments, the connection member 50 may be made of a material having elasticity or flexibility. Due to such a connection member 50, voltage, temperature, and current of a plurality of battery cells 10 may be checked and managed to ensure that they are normal. That is, information about voltage, current, temperature, etc. received by the first protection circuit module 30a from connection tabs 26 adjacent thereto, and information about voltage, current, temperature, etc. received by the second protection circuit module 30b from connection tabs 26 adjacent thereto may be integrated and managed by the protection circuit 30 through the connection member 50.

In some embodiments, in the event that the battery cell 10 swells, impacts may be absorbed by the connection member 50 due to the elasticity or flexibility thereof, thereby preventing the first and second protection circuit modules 30a, 30b from being damaged.

The shape and structure of the connection member 50 is not limited to the shape shown in FIG. 1.

In this way, because the protection circuit module 30 is provided with the first and second protection circuit modules 30a, 30b, the area of the PCB constituting the protection circuit module 30 may be minimized, thereby providing or securing a space inside the battery module 100. This improves work efficiency by facilitating repairs when an abnormality is detected in the battery module 100 as well as fastening work of connecting the connection tab 26 and the protection circuit module 30.

Referring to FIGS. 2 and 3, a battery cell 10 according to embodiments may include a case 20 in which an electrode assembly 1000 is housed, a cap plate 31 joined to an opening of the case 20, and an electrolyte inlet 32.

As illustrated in FIG. 3, the battery cell 10 according to embodiments may include at least one electrode assembly 1000 wound between a positive electrode 1100 and a negative electrode 1200 with a separator 1300 as an insulator interposed therebetween, the case 20 in which the electrode assembly 1000 is housed, and a cap assembly joined to an opening of the case 20.

The battery cell 10 according to embodiments is described as a square lithium ion secondary battery as an example. However, the present disclosure is not limited thereto, and the present disclosure may be applied to various types of batteries such as lithium polymer batteries or cylindrical batteries.

The positive electrode 1100 and the negative electrode 1200 may include a coated portion, which is an area where an active material is applied to a current collector formed of a thin metal foil, and non-coated portions 1100a, 1200a, which are areas not coated with the active material.

The positive electrode 1100 and the negative electrode 1200 are wound with the separator 1300, which is an insulator, interposed therebetween. However, the present disclosure is not limited thereto, and the electrode assembly 1000 described above may be formed in a structure in which a positive electrode 1100 and a negative electrode 1200 made of a plurality of sheets are alternately laminated with a separator 1300 interposed therebetween.

The case 20 forms the overall appearance of the battery cell 10 and may be formed of a conductive metal such as aluminum, an aluminum alloy, or nickel-plated steel. In some embodiments, the case 20 may provide a space in which the electrode assembly 1000 is accommodated.

The cap assembly may include the cap plate 31 covering the opening of the case 20, and the case 20 and the cap plate 31 may be made of a conductive material. Here, the positive and negative electrode terminals 21, 22 electrically connected to the positive electrode 1100 or negative electrode 1200 may be installed to protrude outward by penetrating the cap plate 31.

In some embodiments, outer circumferential surfaces of upper pillars of the positive and negative electrode terminals 21, 22 protruding outward from the cap plate 31 may be threaded and fixed to the cap plate 31 with a nut.

However, the present disclosure is not limited thereto, and the positive and negative electrode terminals 21, 22 may be formed in a rivet structure and may be riveted, or may be welded to the cap plate 31.

In some embodiments, the cap plate 31 may be made of a thin plate and may be joined to the opening of the case 20, and the electrolyte inlet 32 in which a sealing plug 33 may be installed may be formed in the cap plate 31. The electrolye inlet 32 and the plug 33 may form part of the cap assembly.

The positive and negative electrode terminals 21, 22 may be electrically connected to current collectors including first and second current collectors 40, 50 (hereinafter referred to as positive and negative electrode current collectors) welded to the positive electrode non-coated portion 1100a or the negative electrode non-coated portion 1200a.

In some embodiments, the positive and negative electrode terminals 21, 22 may be welded to the positive and negative electrode current collectors 40, 50. However, the present disclosure is not limited thereto, and the positive and negative electrode terminals 21, 22 and the positive and negative electrode current collectors 40, 50 may be formed integrally.

In some embodiments, an insulation member may be installed between the electrode assembly 1000 and the cap plate 31. Here, the insulation member may include first and second lower insulation members 60, 70, and each of the first and second lower insulation members 60, 70 may be installed between the electrode assembly 1000 and the cap plate 31.

In some embodiments, according to embodiments, one end of a separation member that may be installed facing one side of the electrode assembly 1000 may be installed between the insulation member and the positive or negative electrode terminals 21, 22.

Here, the separation member may include first and second separation members 80, 90.

Accordingly, one end of the first and second separation members 80, 90 that may be installed facing one side of the electrode assembly 1000 may be installed between the first and second lower insulation members 60, 70 and the positive and negative electrode terminals 21, 22.

Finally, the positive and negative electrode terminals 21, 22 welded to the positive and negative electrode current collectors 40, 50 may be joined to one end of the first and second lower insulation members 60, 70 and the first and second separation members 80, 90.

The battery cells 10 may include a lower vent 11 opposite to the electrode terminals 21, 22. In some embodiments, when the electrode terminals 21, 22 are positioned at the top, the lower vent 11 may be positioned at the bottom of the battery cells 10. The lower vent 11 may secure the stability of the battery cells 10 by releasing internal gas, flames, and ash when the internal pressure of the battery cells 10 increases due to overcharging.

Such a lower vent 11 may be opened earlier than other areas when the internal pressure of the battery cells 10 is higher than a reference pressure. Accordingly, the lower vent 11 may induce the internal gas of the battery cells 10 to be discharged to the outside in advance above the reference pressure, thereby preventing an accident such as an explosion from occurring. Especially, in circumstances where structures such as bus bars for electrical connection of the battery module 100 are formed on the side or upper portion of the battery module 100, when the lower vent 11 of the battery cells 10 is formed on the lower surface, even if the lower vent 11 of the battery cells 10 is opened, these structures may not be affected.

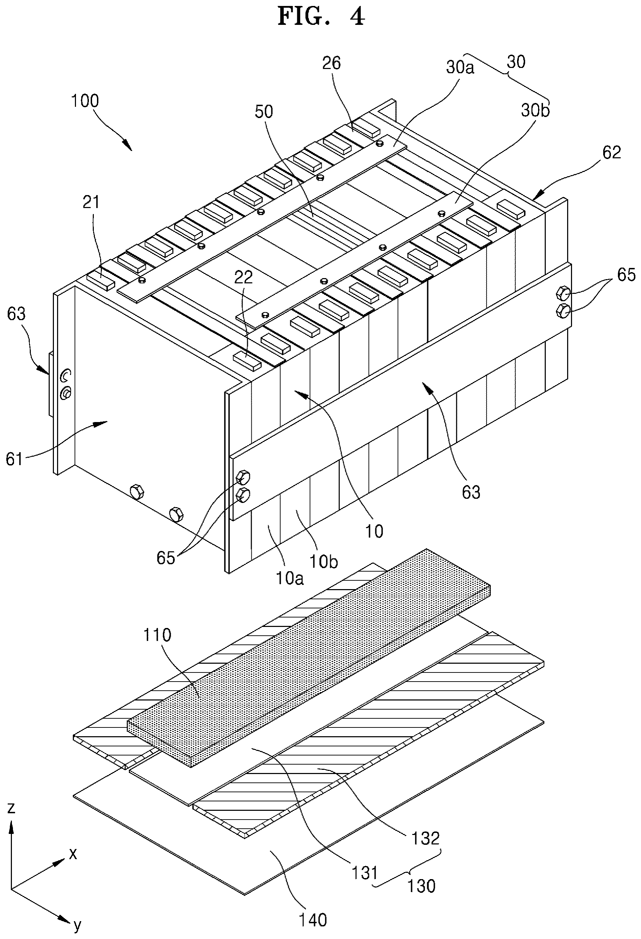

FIG. 4 is a perspective view schematically illustrating an example of a lower sheet 130 and an insulation layer 110 provided at the bottom of the battery module 100 of FIG. 1.

Referring to FIG. 4, the insulation layer 110 and the lower sheet 130 may be attached to the bottom of the battery module 100 to cover the lower vent 11 of a plurality of battery cells 10.

The lower sheet 130 may include a first adhesive layer 131 attached to the insulation layer 110 and second adhesive layers 132 located on each of opposite sides of the first adhesive layer 131 and attached to lower surfaces of a plurality of battery cells 10.

In some embodiments, the insulation layer 110 may extend in a direction parallel to a first direction x.

Accordingly, the first adhesive layer 131 and the second adhesive layer 132 installed to overlap with the insulation layer 110 may also extend in a direction parallel to the first direction x and overlap with the lower surface of the battery module 100.

In some embodiments, the extended length of the lower sheet 130 and the insulation layer 110 may be equal to the length of the battery module 100.

The first adhesive layer 131 may be located at the lower central portion of the battery module 100. The second adhesive layer 132 is positioned on opposite sides of the first adhesive layer 131, and the total area of the second adhesive layer 132 and the first adhesive layer 131 bonded to the bottom of the battery module 100 is determined as an area that does not exceed the length of the battery module 100 in a second direction y and the length of the battery module 100 in the first direction x.

Accordingly, the width of the lower sheet 130 may be made the same as the width of the battery module 100 so that the battery module 100 may be mounted on the lower sheet 130. This may prevent the adhesive layers 131, 132 from protruding out of the lower surface of the battery module 100 and becoming contaminated with external contaminants such as dust.

In some embodiments, the first adhesive layer 131, the second adhesive layer 132 and the insulation layer 110 may have a rectangular shape for overlapping with the battery module 100, but are not limited thereto.

The first adhesive layer 131 and the second adhesive layer 132 may include adhesives on both surfaces. Any method that may bond both surfaces may be used.

In some embodiments, the first adhesive layer 131 and the second adhesive layer 132 may use double-sided tape, but are not limited thereto.

In some embodiments, because the second adhesive layer 132 overlaps with the bottom of the battery module 100 and the first adhesive layer 131 is bonded to the insulation layer 110, the adhesive strengths required for each of the adhesive layers 131 and 132 may be different, and thus the first adhesive layer 131 and the second adhesive layer 132 may use different adhesives or use different amounts of adhesives.

The first adhesive layer 131 and the second adhesive layer 132 may be attached to the battery module 100 while being attached to a tape guide 140. The tape guide 140 may be removed after the first adhesive layer 131 and the second adhesive layer 132 are attached to the battery module 100.

In some embodiments, the first adhesive layer 131 may be positioned at the center of the top of the tape guide 140, the second adhesive layer 132 may be positioned on opposite sides of the first adhesive layer 131 and spaced apart from the first adhesive layer 131, and an insulation layer 110 may be positioned at the top of the first adhesive layer 131.

In some embodiments, the tape guide 140 has an outer surface coated so that it may be easily removed from the first adhesive layer 131 and the second adhesive layer 132. A coating material of the tape guide 140 may be PVC, PET, OPP, or the like, but is not limited thereto.

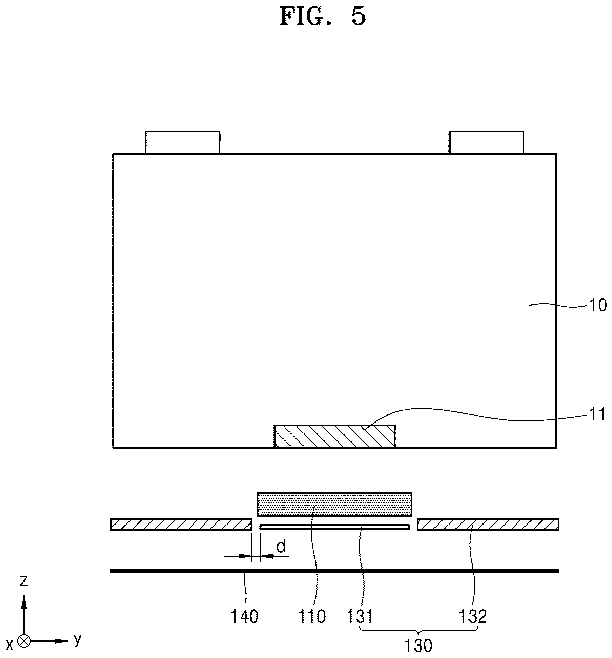

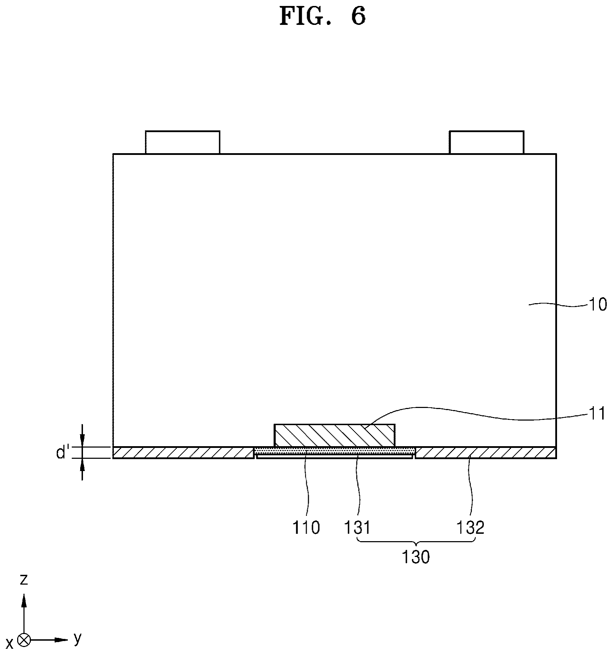

FIGS. 5 and 6 are cross-sectional views each showing the coupling relationship between the battery cell 10 of FIG.2 and the lower sheet 130 and insulation layer 110.

As shown in FIG. 5, the lower sheet 130 may cover the lower surfaces of the battery cells 10.

Through this, the insulation layer 110 is attached to overlap with the lower vent 11 of the battery cells 10, and may block flames, gases, and ash coming out of the lower vent 11.

In some embodiments, the insulation layer 110 overlapping with the lower vent 11 is composed of a material with low thermal conductivity and is selected as a material that is not easily damaged by flames.

In some embodiments, the insulation layer 110 may include aerofoam for high insulation.

The aeroform may include aerogel, the main component of aerogel particles being silicon dioxide (SiO2). Additionally, the size of the aerogel particles may be 10 µm to 100 µm, and the aerogel particles may have a nano-size.

In an existing battery module, when a thermal runaway occurs in one battery cell 10, ash or gas may easily flow into the battery cell 10 adjacent thereto due to the gap between the bottom plate and the lower vent 11, so that heat transfer may occur in the battery cell 10 adjacent thereto.

On the other hand, according to the present disclosure, the first adhesive layer 131, the second adhesive layer 132, and the insulation layer 110 included in the lower sheet 130 replace the conventional bottom plate to cover the entire lower surface of the battery module 100, and because the insulation layer 110 having high insulation properties is positioned to overlap with the lower vent 11, it is difficult for flames, gases, and ash coming from the lower vent 11 to spread to the adjacent cell. In some embodiments, the second adhesive layer 132 may secure a plurality of battery cells 10 included in the battery module 100. Accordingly, heat transfer to surrounding battery cells 10 due to thermal runaway of the battery cells 10 may be prevented.

In some embodiments, the second adhesive layers 132 may be positioned spaced apart from the first adhesive layer 131.

In some embodiments, the distance at which the first adhesive layer 131 and the second adhesive layer 132 are spaced from each other in the second direction y may be 0.5 mm to 1.5 mm per side. The first adhesive layer 131 and the second adhesive layer 132 are spaced apart from each other to minimize interference between the adhesive layers, and through a separation distance d, the accuracy of attaching the insulation layer 110 to the first adhesive layer 131 may be increased.

When the separation distance d is less than 0.5 mm, the insulation layer 110 attached to the top of the first adhesive layer 131 may extend beyond the area of the second adhesive layer 132, thereby reducing adhesion to the battery module 100, and when the separation distance d exceeds 1.5 mm, gases and flames of the lower vent 11 may move between the separation distance d. In some embodiments, the separation distance d is considered to be spaced apart slightly more than the thickness of the second adhesive layer 132, so that the adhesive layers 131 and 132 may be prevented from bonding to each other.

The width of the insulation layer 110 along the second direction y perpendicular to the first direction x may be greater than the width of the lower vent 11 along the second direction y.

In some embodiments, the width of the insulation layer 110 may be about 10% to 20% larger than the width of the lower vent 11. However, it is not limited thereto, and the size of the insulation layer 110 may be changed depending on the size of the lower vent 11.

When the width of the insulation layer 110 is less than 10% of the width of the lower vent 11, the lower vent 11 is not sufficiently covered and flames may easily escape out of the insulation layer 110. In some embodiments, when the width of the insulation layer 110 exceeds 20% of the width of the lower vent 11, the width of the second adhesive layer 132 attached to the bottom of the battery module 100 is reduced, thereby making it difficult to sufficiently secure the battery cell 10.

Accordingly, the width of the insulation layer 110 is formed to be 10% to 20% larger than the width of the lower vent 11.

That is, due to the insulation layer 110 having a wider width than the lower vent 11, gases, flames, ash, or the like discharged from the lower vent 11 of the battery cell 10 do not escape, and heat transfer between the battery cells 10 may be efficiently prevented.

The first adhesive layer 131 may be thinner than the second adhesive layer 132. In some embodiments, the thickness of the first adhesive layer 131 may be 0.01 mm to 0.03 mm, and the thickness of the second adhesive layer 132 may be 0.3 mm to 0.7 mm.

When the first adhesive layer 131 is less than 0.01 mm, the thickness is too thin and may be easily torn, or the first adhesive layer 131 may be easily damaged during the process of attaching the lower sheet 130. On the other hand, when the first adhesive layer 131 exceeds 0.03 mm, the height when added to the insulation layer 110 may be higher, resulting in a large space being occupied.

In some embodiments, in the case of the second adhesive layer 132, when it is less than 0.3 mm, the fixing force for fixing the bottom of the battery module 100 may be reduced, and when it exceeds 0.7 mm, the overall height of the battery module 100 increases, which may reduce space efficiency and make it difficult to configure a battery module 100 that is compact.

As described above, the lower sheet 130 having different thicknesses of the first adhesive layer 131 and the second adhesive layer 132 may create a step between the adhesive layer 131 that is relatively thin and the second adhesive layer 132 that is relatively thick. By using the step between the first adhesive layer 131 and the second adhesive layer 132 to secure the insulation layer 110, mechanical stability of the battery module 100 may be improved.

In some embodiments, the second adhesive layer 132 made relatively thick is not easily torn compared to the first adhesive layer 131 that is relatively thin, and more adhesives may be applied to the second adhesive layer 132 that is relatively thick than to the first adhesive layer 131 that is relatively thin, thereby improving the adhesive strength.

In some embodiments, the adhesives may include rubber, terpene resins, silicones, and acrylates, but is not limited thereto.

As illustrated in FIG. 6, the insulation layer 110 may be in a compressed state due to the weight of the battery module 100.

At this time, the compressibility of the insulation layer 110 may be 20% to 30%. Here, the compressibility of the insulation layer 110 means the degree of compression based on the maximum compressed state of the insulation layer 110.

Typically, as the density of the insulation material increases, its thermal conductivity decreases, which has the advantage of improving insulation properties.

When the compressibility of the insulation layer 110 is less than 20%, the insulation layer 110 may not have sufficient insulation properties, thereby making it difficult to block flames or the like coming out through the lower vent 11, and when the compressibility exceeds 30%, it may be difficult for gases coming out of the lower vent 11 to be discharged smoothly, which may lower the stability of the battery module 100.

That is, when the compressibility is 20% to 30%, the defect rate may be stably reduced in the process of attaching the lower sheet 130 of the battery module 100, and heat transfer of the lower vent 11 may be efficiently blocked.

In this circumstance, the height of the step of the lower sheet 130 formed by the first adhesive layer 131 and the second adhesive layer 132 is designed to be smaller than the height of the lower sheet 130 of the battery module 100 at a standard, and the height formed by the insulation layer 110 compressed and the first adhesive layer 131 is designed to be the same as the height of the second adhesive layer 132, so that the surfaces of the insulation layer 110 and the second adhesive layer 132 are positioned on the same plane, thereby allowing the lower surface of the battery module 100 to be in close contact with each other.

That is, the sum of the thickness of the insulation layer 110 compressed and the thickness of the first adhesive layer 131 may be equal to the thickness of the second adhesive layer 132.

After the process of attaching the lower sheet 130, the final height d' of the lower sheet 130 is equal to the height of the second adhesive layer 132, and the height of the second adhesive layer 132 is equal to the sum of the heights of the first adhesive layer 131 and the insulation layer 110.

After compression, the thickness of the insulation layer 110 may be formed as much as the height difference between the first adhesive layer 131 and the second adhesive layer 132, which allows the surface of the insulation layer 110 and the surface of the second adhesive layer 132 to be simultaneously positioned on the same plane, thereby increasing the adhesion between the battery cells 10 and the lower sheet 130 and fixing the battery cells 10 and the lower sheet 130 so that they do not easily fall off from each other.

This effectively seals the lower sheet 130 and the insulation layer 110 to the lower vent 11, thereby effectively blocking flames, gases, and ash coming from the lower vent 11 to prevent heat transfer.

Accordingly, the insulation layer 110 compressed by the battery module 100 and having a high density has higher insulation properties than the insulation layer 110 before compression, and the height plane formed by the lower sheet 130 and the insulation layer 110 is the same, so that it is in close contact with the lower vent 11 located at the bottom of the battery module 100, thereby reducing the degree of damage to the battery cell 10 from flames coming from the lower vent 11 and reducing heat transfer more efficiently than when using a conventional bottom plate.

In some embodiments, as mentioned above, the first adhesive layer 131, the second adhesive layer 132 and the insulation layer 110 may be used to fix the battery cells 10 by replacing the bottom plate, and because the height after assembling the lower sheet 130 and the insulation layer 110 has a height of 0.3 mm to 0.7 mm, the space occupied by the existing bottom plate may be saved, thereby allowing the battery module 100 to be designed compactly.

In some embodiments, the bottom plate made of existing metal may be replaced with an insulation layer 110 and adhesive layers 131, 132 to reduce conduction between the battery cell 10 and the housing.

The battery module 100 according to the present disclosure may improve stability by preventing flames or the like from spreading to adjacent battery cells 10 even if thermal runaway occurs in one battery cell.

Embodiments are set out in the following clauses.

Clause 1. A battery module, comprising a plurality of battery cells arranged side by side along a first direction with main surfaces thereof facing each other, each battery cell including a lower vent, an insulation layer covering the lower vents of the plurality of battery cells, and a lower sheet located under the insulation layer, wherein the lower sheet includes a first adhesive layer attached to the insulation layer and second adhesive layers located on each of opposite sides of the first adhesive layer and attached to lower surfaces of the plurality of battery cells, and the second adhesive layers are positioned spaced apart from the first adhesive layer.

Clause 2. The battery module of Clause 1, wherein the insulation layer extends in a direction parallel to the first direction.

Clause 3.The battery module of Clause 1, wherein a width of the insulation layer along a second direction perpendicular to the first direction is greater than a width of the lower vent along the second direction.

Clause 4. The battery module of Clause 1, wherein the first adhesive layer is thinner than each of the second adhesive layers.

Clause 5. The battery module of Clause 1, wherein a thickness of the first adhesive layer is 0.01 mm to 0.03 mm.

Clause 6. The battery module of Clause 1, wherein a thickness of the second adhesive layer is 0.3 mm to 0.7 mm.

Clause 7. The battery module of Clause 1, wherein the insulation layer includes aerofoam.

Clause 8. The battery module of Clause 7, wherein the aeroform has a compressed state.

Clause 9. The battery module of Clause 8, wherein a compressibility of the aeroform is 20% to 30%.

Clause 10. The battery module of Clause 9, wherein a sum of a thickness of the compressed aeroform and a thickness of the first adhesive layer is equal to a thickness of each of the second adhesive layers.

Clause 11. A battery module, comprising a plurality of battery cells arranged side by side along a first direction with main surfaces thereof facing each other, each battery cell including a lower vent, an insulation layer covering the lower vents of the plurality of battery cells, and a lower sheet located under the insulation layer, wherein the lower sheet includes a first adhesive layer attached to the insulation layer and second adhesive layers located on each of opposite sides of the first adhesive layer and attached to lower surfaces of the plurality of battery cells, and the insulation layer has a compressibility of 20% to 30% and is compressed.

Clause 12. The battery module of Clause 11, wherein the insulation layer extends in a direction parallel to the first direction.

Clause 13. The battery module of Clause 11, wherein a width of the insulation layer along a second direction perpendicular to the first direction is greater than a width of the lower vent along the second direction.

Cause 14. The battery module of Clause 11, wherein the first adhesive layer is thinner than each of the second adhesive layers.

Clause 15. The battery module of Clause 11, wherein a thickness of the first adhesive layer is 0.01 mm to 0.03 mm.

Clause 16. The battery module of Clause 11, wherein a thickness of each of the second adhesive layers is 0.3 mm to 0.7 mm.

Clause 17. The battery module of Clause 11, wherein the insulation layer includes aerofoam.

Clause 18. The battery module of Clause 11, wherein the second adhesive layers are positioned spaced apart from the first adhesive layer.

Clause 19. The battery module of Clause 11, wherein each of the plurality of battery cells includes an electrode terminal on an opposite side from the lower vent.

Clause 20. The battery module of Clause 11, wherein a sum of a thickness of the compressed insulation layer and a thickness of the first adhesive layer is equal to a thickness of each of the second adhesive layers.

Although the above has been described with reference to the embodiments illustrated in the drawings, these are merely examples, and those skilled in the art will understand that various modifications and equivalent other embodiments are possible therefrom. Therefore, the scope of the present disclosure should be determined by the appended claims.

## Claims

1. A battery module, comprising:
a plurality of battery cells arranged side by side along a first direction with main side surfaces thereof facing each other, each battery cell including a lower vent on a lower surface thereof;
an insulation layer covering the lower vents of the plurality of battery cells; and
a lower sheet located under the insulation layer, wherein:
the lower sheet includes a first adhesive layer attached to the insulation layer and second adhesive layers located on each of opposite sides of the first adhesive layer and attached to the lower surfaces of the plurality of battery cells; and
the second adhesive layers are positioned spaced apart from the first adhesive layer.

2. The battery module of claim 1, wherein the insulation layer extends in a direction parallel to the first direction.

3. The battery module of claim 1 or 2, wherein a width of the insulation layer along a second direction perpendicular to the first direction is greater than a width of the lower vent along the second direction.

4. The battery module of claim 1, 2 or 3, wherein the first adhesive layer is thinner than each of the second adhesive layers.

5. The battery module of any preceding claim, wherein a thickness of the first adhesive layer is 0.01 mm to 0.03 mm.

6. The battery module of any preceding claim, wherein a thickness of the second adhesive layer is 0.3 mm to 0.7 mm.

7. The battery module of any preceding claim, wherein the insulation layer includes aerofoam.

8. The battery module of claim 7, wherein the aeroform has a compressed state.

9. The battery module of claim 8, wherein a compressibility of the aeroform is 20% to 30%.

10. The battery module of claim 9, wherein a sum of a thickness of the compressed aeroform and a thickness of the first adhesive layer is equal to a thickness of each of the second adhesive layers.

11. A battery module, comprising:
a plurality of battery cells arranged side by side along a first direction with main side surfaces thereof facing each other, each battery cell including a lower vent on a lower surface thereof,
an insulation layer covering the lower vents of the plurality of battery cells, and
a lower sheet located under the insulation layer, wherein
the lower sheet includes a first adhesive layer attached to the insulation layer and second adhesive layers located on each of opposite sides of the first adhesive layer and attached to the lower surfaces of the plurality of battery cells, and
the insulation layer has a compressibility of 20% to 30% and is in a compressed state.

12. The battery module of claim 11, wherein at least one of:
the insulation layer includes aerofoam;
the insulation layer extends in a direction parallel to the first direction;
a width of the insulation layer along a second direction perpendicular to the first direction is greater than a width of the lower vent along the second direction.

13. The battery module of claim 11 or 12, wherein at least one of:
the first adhesive layer is thinner than each of the second adhesive layers;
a thickness of the first adhesive layer is 0.01 mm to 0.03 mm;
a thickness of each of the second adhesive layers is 0.3 mm to 0.7 mm.

14. The battery module of claim 11, 12 or 13, wherein the second adhesive layers are positioned spaced apart from the first adhesive layer.

15. The battery module of any one of claims 11 to 14, wherein each of the plurality of battery cells includes an electrode terminal on an opposite side from the lower vent.
